# EUROPEAN PATENT APPLICATION

(11) **EP 4 667 792 A1**
(43) Date of publication of application: **24.12.2025**
(21) Application number: 24755979.2
(22) Date of filing: 30.01.2024
(51) Int. Cl.: F16K 3/314, F16K 11/065

(54) **SLIDING BLOCK STRUCTURE AND REVERSING VALVE**

(30) Priority: 14.02.2023 CN 202310166309
(71) Applicant: Zhejiang Dunan Artificial Environment Co., Ltd., Shaoxing Zhejiang 311800 (CN)
(72) Inventor: XUAN, Qijie, Shaoxing, Zhejiang 311800 (CN); ZHU, Jiafeng, Shaoxing, Zhejiang 311800 (CN); SUN, Junjie, Shaoxing, Zhejiang 311800 (CN)
(74) Representative: Studio Torta S.p.A.
(86) International application number: PCT/CN2024/074763
(87) International publication number: WO 2024/169605

(57) **Abstract**

A sliding block structure and a reversing valve. The sliding block structure comprises a sliding block body (100) and a supporting inner shell (200). The sliding block body (100) covers the outer surface of the supporting inner shell (200). The sliding block body (100) is provided with a flange (101). The supporting inner shell (200) is provided with a flanged edge. An edge of the flanged edge is provided with a notch (202). The flange (101) wraps the outside of the flanged edge and fills the notch (202). The flange of the sliding block structure wraps the outside of the flanged edge and fills the notch in the edge of the flanged edge, thus improving the connection reliability of the sliding block body and the supporting inner shell.

## Description

### CROSS-REFERENCE TO RELATED APPLICATION

The present disclosure claims priority to Chinese Patent Application No. 2023101663097, filed on February 14, 2023 and titled "Sliding Block Structure and Reversing Valve", which is incorporated herein by reference in its entirety.

### TECHNICAL FIELD

The present disclosure relates to a sliding block structure and a reversing valve.

### BACKGROUND

In the related art, a reversing valve (such as a four-way valve) includes a valve body and a sliding block disposed in an inner cavity of the valve body; the valve body is provided with an inlet and a plurality of reversing ports; and the sliding block moves in the inner cavity of the valve body to achieve communication between the inlet and one of the reversing ports. However, the existing sliding block structure does not have sufficient strength, and there may be a risk of breakage of the sliding block.

### SUMMARY

The present disclosure aims to provide a sliding block structure and a reversing valve, to alleviate the technical problem of insufficient strength of the existing sliding block structure in the related art, which may lead to breakage of the sliding block.

According to an aspect of the present disclosure, the present disclosure provides a sliding block structure, including a sliding block body and a supporting inner shell. The sliding block body covers an outer surface of the supporting inner shell and is provided with a flange; the supporting inner shell is provided with a flanged edge, and a notch is provided at a periphery of the flanged edge; and the flange is wrapped around an outside of the flanged edge and fills the notch.

According to an embodiment of the present disclosure, the flanged edge is provided with a through-hole, the through-hole is staggered from the notch, and the flange fills the through-hole.

According to an embodiment of the present disclosure, an upper surface of the flanged edge is provided with a protrusion; and/or a lower surface of the flanged edge is provided with a protrusion.

According to an embodiment of the present disclosure, an upper surface of the flanged edge is provided with a protrusion, and/or a lower surface of the flanged edge is provided with a protrusion. The protrusion is staggered from the through-hole, or the protrusion is located at a periphery of the through-hole.

According to an embodiment of the present disclosure, the protrusion is a ring-shaped protrusion.

According to an embodiment of the present disclosure, the flanged edge includes a first flanged edge and a second flanged edge, the first flanged edge extends along a length direction of the supporting inner shell, the second flanged edge extends along a width direction of the supporting inner shell, a width of the first flanged edge is greater than a width of the second flanged edge, and the notch is disposed at a periphery of the first flanged edge.

According to an embodiment of the present disclosure, the sliding block structure further includes a reinforcing structure, and the reinforcing structure is provided on an outer surface of the sliding block body or on an upper surface of the flange.

According to an embodiment of the present disclosure, the sliding block structure further includes a support pin; the supporting inner shell is provided with a mounting hole located above the flanged edge; the support pin is mounted in the mounting hole and extends along a width direction of the supporting inner shell.

According to an embodiment of the present disclosure, a plurality of support pins are provided and spaced apart along a length direction of the supporting inner shell.

According to an embodiment of the present disclosure, the support pin is welded or riveted to the supporting inner shell.

According to an embodiment of the present disclosure, the sliding block body has an inner cavity, and the outer surface of the supporting inner shell is in contact with a cavity wall of the inner cavity.

According to an embodiment of the present disclosure, the flange is integrally formed with the sliding block body.

Based on the above objective, the present disclosure further provides a reversing valve including the sliding block structure.

The present disclosure has the following beneficial effects.

For the sliding block structure provided by the present disclosure, since the sliding block body covers the outer surface of the supporting inner shell, the strength of the sliding block body may be enhanced. Since the sliding block body is provided with the flange, the supporting inner shell is provided with the flanged edge, and the notch is provided at the periphery of the flanged edge, the flange is wrapped around the outside of the flanged edge and fills the notch at the periphery of the flanged edge, which may improve the reliability of connection between the sliding block body and the supporting inner shell, and a contact area between the flanged edge and the flange may be enlarged on the basis of ensuring the mechanical strength of the supporting inner shell itself, thereby reducing a risk of fracture at a contact position between the sliding block body and the flanged edge.

### BRIEF DESCRIPTION OF THE DRAWINGS

The above and other features and advantages of the present disclosure will become more apparent by describing in detail exemplary embodiments with reference to the accompanying drawings.
FIG. 1 is a structural schematic view of a sliding block structure according to an embodiment of the present disclosure;
FIG. 2 is a structural schematic view of a sliding block structure according to an embodiment of the present disclosure from another viewing angle;
FIG. 3 is a sectional view along a length direction of a sliding block structure according to an embodiment of the present disclosure;
FIG. 4 is a sectional view along a width direction of a sliding block structure according to an embodiment of the present disclosure;
FIG. 5 is a structural schematic view of a sliding block body in a sliding block structure according to an embodiment of the present disclosure;
FIG. 6 is a structural schematic view of a supporting inner shell in a sliding block structure according to an embodiment of the present disclosure;
FIG. 7 is another structural schematic view of a supporting inner shell in a sliding block structure according to an embodiment of the present disclosure;
FIG. 8 is a third structural schematic view of a supporting inner shell in a sliding block structure according to an embodiment of the present disclosure;
FIG. 9 is a fourth structural schematic view of a supporting inner shell in a sliding block structure according to an embodiment of the present disclosure;
FIG. 10 is another structural schematic view of a sliding block structure according to an embodiment of the present disclosure.

Reference numerals:
100- sliding block body; 101- flange; 102- inner cavity; 103- recess; 200- supporting inner shell; 2011- first flanged edge; 2012- second flanged edge; 202- notch; 203- through-hole; 204- protrusion; 205- mounting hole; 300- support pin; 401- first reinforcing rib; 402-second reinforcing rib; 403- convex rib.

### DETAILED DESCRIPTION

Exemplary embodiments will be now described more fully with reference to the accompanying drawings. However, the exemplary embodiments may be implemented in a variety of forms and should not be construed as being limited to the embodiments set forth herein. Although relative terms such as "above" and "below" are used herein to describe the relationship of one component relative to another component, such terms are used herein only for the sake of convenience, for example, in accordance with the exemplary orientations depicted in the accompanying drawings. It can be understood that if the referenced device is inversed upside down, a component described as "above" will become a component described as "below". Other relative terms such as "top" and "bottom" also have similar meanings. When a structure is described as "above" another structure, it probably means that the structure is integrally formed on another structure, or the structure is "directly" disposed on another structure, or the structure is "indirectly" disposed on another structure through an additional structure.

Words "one," "a/an," "the" and "said" are used herein to indicate the presence of one or more elements/component parts/and others. Terms "including" and "having" have an inclusive meaning which means that there may be additional elements/component parts/and others in addition to the listed elements/component parts/and others. Terms such as "first" and "second" are used herein only as markers and do not limit the number of objects modified after them.

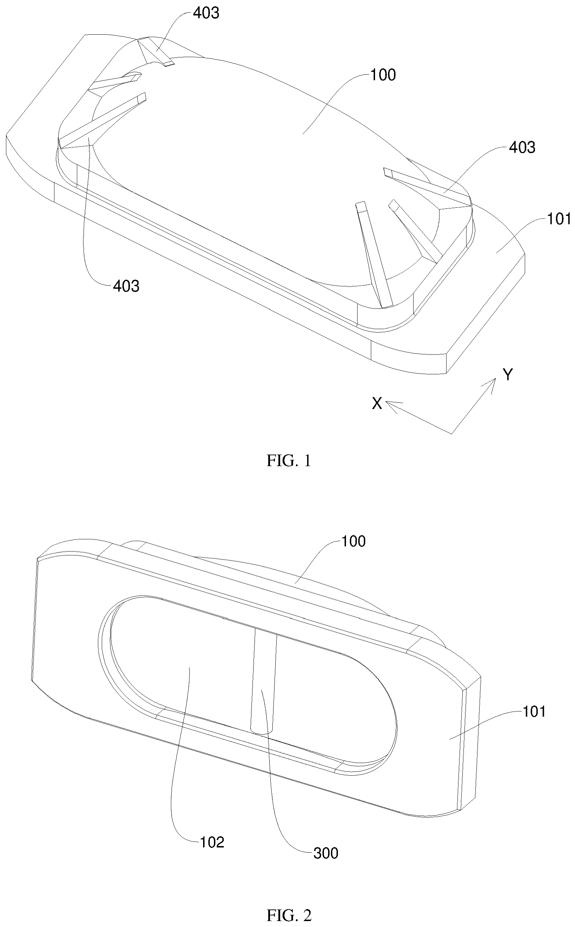

Referring to FIGS. 1 to 6, embodiments of the present disclosure provide a sliding block structure including a sliding block body 100 and a supporting inner shell 200. The sliding block body 100 covers an outer surface of the supporting inner shell 200 and is provided with a flange 101. The supporting inner shell 200 is provided with a flanged edge, and a periphery of the flanged edge is provided with a notch 202. The flange 101 is wrapped around an outside of the flanged edge and fills the notch 202.

For the sliding block structure according to the embodiments of the present disclosure, since the sliding block body 100 covers the outer surface of the supporting inner shell 200, the strength of the sliding block body 100 may be enhanced. Since the sliding block body 100 is provided with the flange 101, the supporting inner shell 200 is provided with the flanged edge, and the notch 202 is provided at the periphery of the flanged edge, the flange 101 is wrapped around the outside of the flanged edge by injection molding or sintering and fills the notch 202 at the periphery of the flanged edge. As a result, an adhesive force between the flange 101 and the flanged edge may be increased, thereby improving the reliability of connection between the sliding block body 100 and the supporting inner shell 200, and a contact area between the flanged edge and the flange 101 may be enlarged on the basis of ensuring the mechanical strength of the supporting inner shell 200 itself, thereby reducing a risk of fracture at a contact position between the sliding block body 100 and the flanged edge.

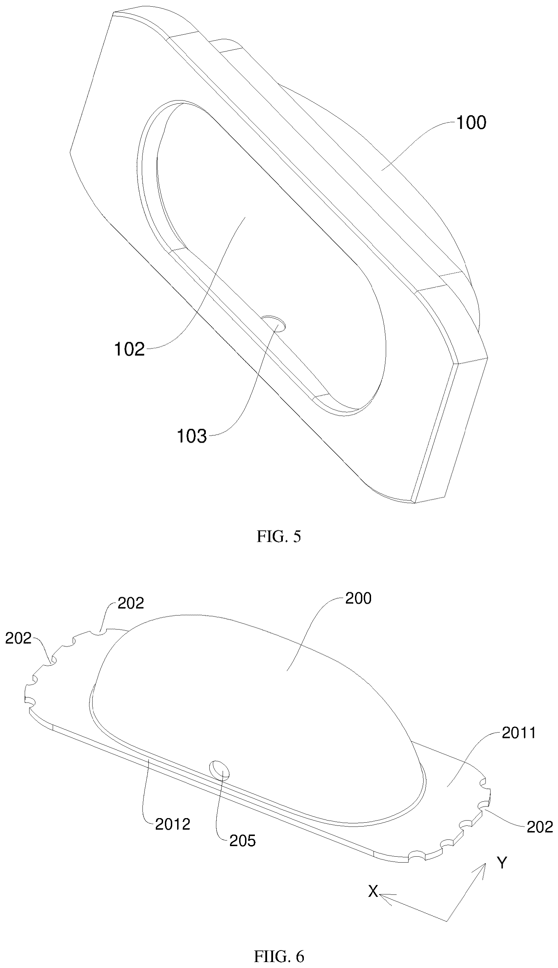

In an embodiment, as shown in FIGS. 1 and 6, a length direction of the supporting inner shell 200 and a length direction of the sliding block body 100 are represented by an arrow direction X, and a width direction of the supporting inner shell 200 and a width direction of the sliding block body 100 are represented by an arrow direction Y, in which X direction and Y direction are perpendicular to each other. The flanged edge includes a first flanged edge 2011 and a second flanged edge 2012. The first flanged edge 2011 extends along the length direction of the supporting inner shell 200, while the second flanged edge 2012 extends along the width direction of the supporting inner shell 200. The first flanged edge 2011 has a greater width than the second flanged edge 2012. The notch 202 is disposed at a periphery of the first flanged edge 2011.

For example, two first flanged edges 2011 are provided and arranged opposite to each other, and two second flanged edges 2012 are provided and arranged opposite to each other. The flanged edge is integrally formed with the supporting inner shell 200, and the first flanged edge 2011 is integrally formed with the second flanged edge 2012.

In some embodiments, a plurality of notches 202 are provided, and the plurality of notches 202 are spaced apart at the periphery of the first flanged edge 2011. For example, the shape of each of the notches 202 is a circular arc-shaped groove. It should be noted that the shape of each of the notches 202 may also be a V-shaped groove, a dovetailed groove, a straight groove, or a trapezoidal groove with a width at a groove opening greater than at a groove bottom.

In an embodiment, the supporting inner shell 200 is made of metal or alloy, and an inner surface of the supporting inner shell 200 is continuous and smooth. The sliding block body 100 is made of plastic.

In an embodiment, as shown in FIG. 2, the sliding block structure further includes a support pin 300. As shown in FIG. 6, the supporting inner shell 200 is provided with a mounting hole 205 located above the flanged edge. The support pin 300 is mounted in the mounting hole 205 and extends along the width direction of the supporting inner shell 200.

Specifically, mounting holes 205 are provided at both ends of the supporting inner shell 200 in the width direction, and the two mounting holes 205 are arranged opposite to each other. Two ends of the support pin 300 are correspondingly mounted in the two mounting holes 205 to provide support and prevent deformation of the sliding block body 100. Since the mounting holes 205 are located above the flanged edge, the mounting holes 205 do not affect the flanged edge, ensuring the strength of the flanged edge and thus ensuring the strength of the supporting inner shell 200.

As shown in FIG. 5, the sliding block body 100 is provided with a recess 103 corresponding to the mounting hole 205, and an end of the support pin 300 is embedded in the recess 103.

For example, a cross-sectional shape of the support pin 300 may be circular or rectangular, and the support pin 300 may be a columnar structure or a tubular structure.

In an embodiment, a plurality of support pins 300 are provided and spaced along the length direction of the supporting inner shell 200. In this way, a support effect may be further enhanced to prevent deformation of the sliding block body 100.

For example, the plurality of support pins 300 are arranged in parallel and spaced apart along the length direction of the supporting inner shell 200. Meanwhile, a plurality of mounting holes 205 are provided in pairs and are arranged in parallel and spaced apart along the length direction of the supporting inner shell 200, and two ends of each support pin 300 are correspondingly mounted in one pair of mounting holes 205.

The supporting inner shell 200 is provided with the mounting holes 205 that fit with the support pins 300, and the supporting inner shell 200 and the support pins 300 are connected by welding or riveting, which may prevent the support pins 300 from separating from the supporting inner shell 200, increase the strength of the supporting inner shell 200 and the overall mechanical strength of the sliding block structure, and avoid a risk of damage to the sliding block structure due to abnormal pressure during a reversing process of a reversing valve.

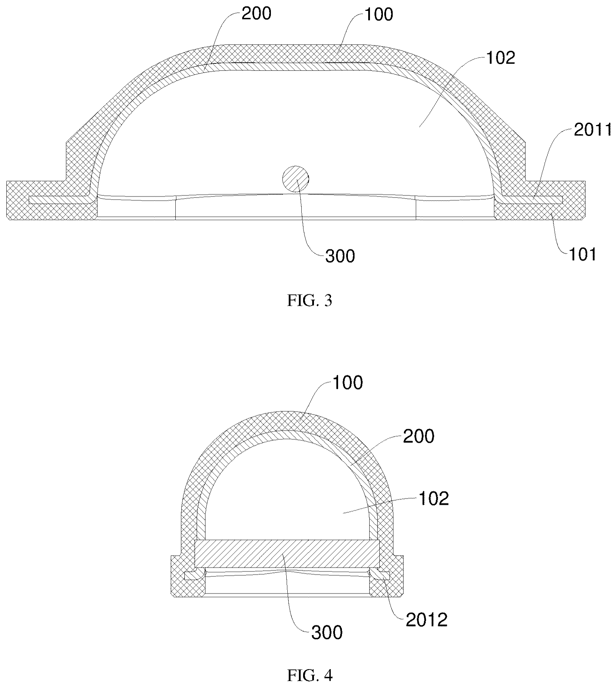

In an embodiment, as shown in FIGS. 3, 4, and 5, the sliding block body 100 has an inner cavity 102, and the outer surface of the supporting inner shell 200 is in contact with a cavity wall of the inner cavity 102.

In an example where the sliding block structure is applied to a four-way valve, the four-way valve includes a valve body provided with an inlet, a first port, a second port, and a third port, the second port is located between the first port and the third port, and the sliding block structure moves within the inner cavity 102 of the valve body cavity to achieve communication between the inlet and the first port or between the inlet and the third port. For example, when the inlet is in communication with the first port, the second port is in communication with the third port through the inner cavity 102 of the sliding block body 100. When a fluid flows inside and outside the sliding block body 100, it will have an impact on the sliding block body 100. By providing the supporting inner shell 200 inside the sliding block body 100 and providing the notch 202 at the periphery of the flanged edge of the supporting inner shell 200, the reliability of connection between the sliding block body 100 and the supporting inner shell 200 may be improved, and on the basis of ensuring the mechanical strength of the supporting inner shell 200 itself, the contact area between the flanged edge and the flange 101 may be increased, thereby reducing the risk of fracture at the contact position between the sliding block body 100 and the flanged edge.

When the sliding block structure is applied to the four-way valve, the fluid entering the valve body from the inlet first impacts the sliding block body 100 in the width direction. In order to improve the structural strength of the sliding block body 100 and reduce the risk of deformation or even breakage due to fluid impact, in an embodiment, the sliding block structure further includes a reinforcing structure and, as shown in FIG. 1, and the reinforcing structure is disposed on an outer surface of the sliding block body 100. For example, the reinforcing structure includes a plurality of convex ribs 403 spaced apart in the width direction of the sliding block body 100.

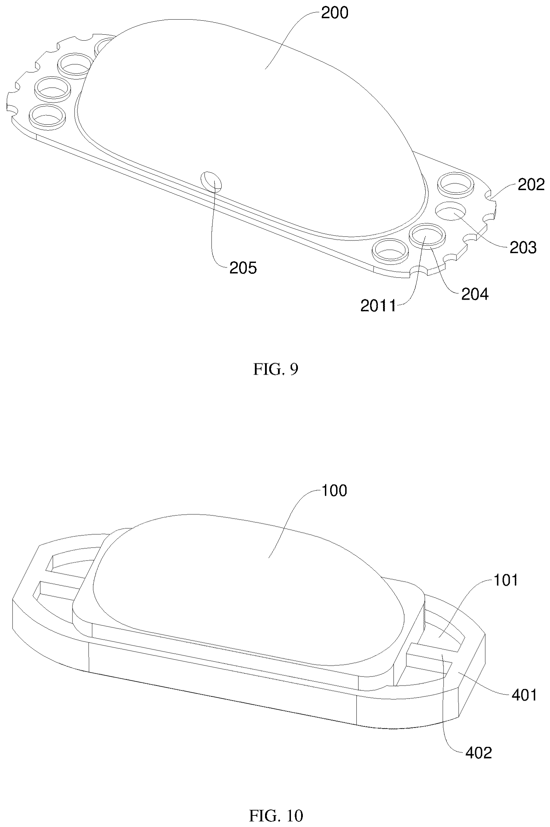

In other embodiments, as shown in FIG. 10, the reinforcing structure may also be disposed on an upper surface of the flange 101. For example, the reinforcing structure includes a first reinforcing rib 401 and a second reinforcing rib 402. The first reinforcing rib 401 is arranged along a peripheral direction of the flange 101, and the second reinforcing rib 402 is arranged in a middle position of the flange 101. One end of the second reinforcing rib 402 is integrally formed with a side edge of the sliding block body 100 in the width direction, while the other end of the second reinforcing rib 402 is integrally formed with the first reinforcing rib 401.

In this embodiment, both the reinforcing structure and the sliding block body 100 are integrally formed by injection molding or sintering.

In an embodiment, the flange 101 is integrally formed with the sliding block body 100. For example, the material of the flange 101 is the same as that of the sliding block body 100.

A method for producing the sliding block structure according to embodiments of the present disclosure mainly includes the following steps.

The notch 202 is formed at the periphery of the flanged edge of the supporting inner shell 200, and the mounting holes 205 are formed at both ends of the supporting inner shell 200 in the width direction. The number of mounting holes 205 is determined according to the number of support pins 300, and each support pin 300 needs two mounting holes 205 disposed opposite to each other for installation.

The support pin 300 is fixedly mounted in the mounting holes 205 by welding or riveting, and an end of the support pin 300 protrudes from the outer surface of the supporting inner shell 200.

The supporting inner shell 200 mounted with the support pin 300 is placed in an injection mold for injection molding. The injection-molded sliding block body 100 is attached to the supporting inner shell 200, and the injection-molded flange 101 is wrapped around the outside of the flanged edge and fills the notch 202. Meanwhile, it should be understood that the recess 103 in FIG. 5 is formed after injection molding since the end of the support pin 300 protrudes from the outer surface of the supporting inner shell 200.

It should be noted that by using cavities of different shapes, a sliding block structure with a reinforcing structure may be injection-molded, and a sliding block structure without the reinforcing structure may also be injection-molded.

Additionally, it should be noted that the sliding block body 100 and the flange 101 may also be formed by sintering when the sliding block body 100 and the flange 101 is made of metal or alloy.

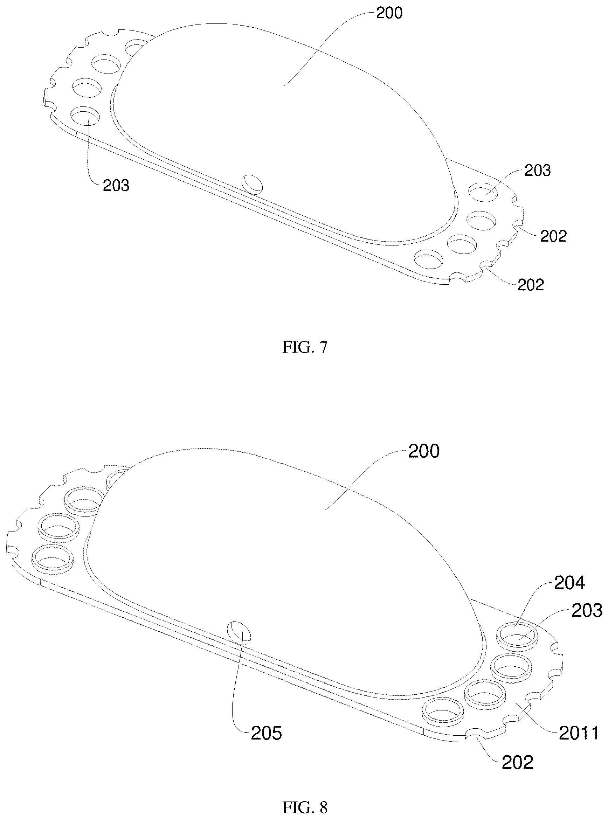

In an embodiment, as shown in FIG. 7, the flanged edge is provided with a through-hole 203, which is staggered from the notch 202, and the flange 101 fills the through-hole 203.

In a case where the sliding block structure is applied to a four-way valve, when the four-way valve needs reversing, the sliding block body 100 is subjected to a shear force from the edge of the supporting inner shell 200 during movement of the sliding block structure. By providing the through-hole 203 staggered from the notch 202, i.e., the through-hole 203 being not in connection with the notch 202, the mechanical strength of the flanged edge may be ensured, and the contact area between the flanged edge and the flange 101 (especially a contact area between a surface of the flanged edge in its thickness direction and the flange 101) may be enlarged. After the flange 101 fills the through-hole 203 during the injection molding process, the adhesive force between the flange 101 and the flanged edge is increased, improving the reliability of connection between the sliding block body 100 and the supporting inner shell 200, so as to diminish influence of the shear force on the sliding block body 100 and reduce the risk of fracture at the contact position between the sliding block body 100 and the flanged edge.

In an embodiment, an upper surface of the flanged edge is provided with a protrusion 204 and, as shown in FIG. 8, the protrusion 204 is disposed at a periphery of the through-hole 203. Specifically, the protrusion 204 may be a ring-shaped protrusion that extends along the periphery of the through-hole 203 and towards the upper surface of the flanged edge. By providing the protrusion 204, the contact area between the flange 101 and the surface of the flanged edge in the thickness direction may be increased, that is, the flange 101 may simultaneously contact the protrusion 204 and the surface of the flanged edge in the thickness direction, which may reduce the risk of fracture at the contact position between the sliding block body 100 and the flanged edge.

In other embodiments, the protrusion 204 is staggered from the through-hole 203. That is, the protrusion 204 may not extend along the periphery of the through-hole 203.

It should be noted that the protrusion 204 may also be provided on a lower surface of the flanged edge. When a plurality of protrusions 204 are provided, a part of the protrusions 204 may be disposed on the upper surface of the flanged edge, and another part of the protrusions 204 may be disposed on the lower surface of the flanged edge.

In some embodiments, as shown in FIG. 9, the upper surface of the flanged edge is provided with the protrusion 204. That is, the protrusion 204 may be directly disposed on the upper surface of the flanged edge, in which case the flanged edge may not be provided with the through-hole 203. The protrusion 204 may be a ring-shaped protrusion or a columnar protrusion.

In other embodiments, the lower surface of the flanged edge is provided with the protrusion 204.

It should be noted that protrusions 204 may also be provided on both the upper surface and the lower surface of the flanged edge.

In an embodiment, the protrusion 204 and the flanged edge may be welded, and the protrusion 204 may also be formed by stamping the flanged edge.

It should be noted that the protrusion 204 and the through-hole 203 may be provided separately or simultaneously. The shapes of the protrusion 204 and the through-hole 203 may be selected according to requirements and are not limited herein. When the protrusion 204 and the through-hole 203 are provided simultaneously, the protrusion 204 may extend along the periphery of the through-hole 203 towards the upper surface or the lower surface of the flanged edge, or may be staggered from the through-hole 203, that is, the protrusion 204 may also be directly disposed on the upper surface or the lower surface of the flanged edge. When a plurality of protrusions 204 and a plurality of through-holes 203 are provided, at least some of the protrusions 204 may extend along respective periphery of the through-holes 203 towards the upper surface or the lower surface of the flanged edge, or at least some of the protrusions 204 may be staggered from the through-holes 203.

Embodiments further provide a reversing valve, including the sliding block structure provided in the embodiments.

The reversing valve according to the embodiments of the present disclosure is subjected to a shear force from the edge of the supporting inner shell 200 during movement of the sliding block structure. By adopting the sliding block structure according to the present disclosure, the strength of the sliding block body 100 is enhanced, and the adhesive force between the flange 101 and the flanged edge is increased, improving the reliability of connection between the sliding block body 100 and the supporting inner shell 200; meanwhile, the contact area between the flanged edge and the flange 101 may be enlarged on the basis of ensuring the mechanical strength of the supporting inner shell 200 itself, so as to diminish influence of the shear force on the sliding block body 100 and reduce the risk of fracture at the contact position between the sliding block body 100 and the flanged edge.

For example, the reversing valve in an embodiment is a four-way valve.

It should be noted that the reversing valve may also be a multi-way valve other than the four-way valve.

It should be understood that the present disclosure does not limit its application to the detailed structure and arrangement of the components mentioned in this specification. The present disclosure may have other embodiments and may be implemented and executed in various ways. The aforementioned variations and modifications fall into the scope of the present disclosure. It should be understood that the present disclosure, as disclosed and limited in this specification, extend to all alternative combinations of two or more individual features mentioned or apparent in the text and/or in the accompanying drawings. All of these different combinations constitute a plurality of alternative aspects of the present disclosure. The embodiments described in this specification illustrate the optimal ways known for implementing the present disclosure and will enable those skilled in the art to utilize the present disclosure.

## Claims

1. A sliding block structure, comprising a sliding block body and a supporting inner shell, wherein the sliding block body covers an outer surface of the supporting inner shell and is provided with a flange; the supporting inner shell is provided with a flanged edge, and a notch is provided at a periphery of the flanged edge; the flange is wrapped around an outside of the flanged edge and fills the notch.

2. The sliding block structure according to claim 1, wherein the flanged edge is provided with a through-hole, the through-hole is staggered from the notch, and the flange fills the through-hole.

3. The sliding block structure according to claim 1, wherein an upper surface of the flanged edge is provided with a protrusion; and/or
a lower surface of the flanged edge is provided with a protrusion.

4. The sliding block structure according to claim 2, wherein an upper surface of the flanged edge is provided with a protrusion, and/or a lower surface of the flanged edge is provided with a protrusion;
wherein the protrusion is staggered from the through-hole, or the protrusion is located at a periphery of the through-hole.

5. The sliding block structure according to claim 4, wherein the protrusion is a ring-shaped protrusion.

6. The sliding block structure according to any one of claims 1 to 5, wherein the flanged edge comprises a first flanged edge and a second flanged edge, the first flanged edge extends along a length direction of the supporting inner shell, the second flanged edge extends along a width direction of the supporting inner shell, a width of the first flanged edge is greater than a width of the second flanged edge, and the notch is disposed at a periphery of the first flanged edge.

7. The sliding block structure according to any one of claims 1 to 5, wherein the sliding block structure further comprises a reinforcing structure, and the reinforcing structure is provided on an outer surface of the sliding block body or on an upper surface of the flange.

8. The sliding block structure according to any one of claims 1 to 5, wherein the sliding block structure further comprises a support pin; the supporting inner shell is provided with a mounting hole located above the flanged edge; the support pin is mounted in the mounting hole and extends along a width direction of the supporting inner shell.

9. The sliding block structure according to claim 8, wherein a plurality of support pins are provided and spaced apart along a length direction of the supporting inner shell.

10. The sliding block structure according to claim 8, wherein the support pin is welded or riveted to the supporting inner shell.

11. The sliding block structure according to any one of claims 1 to 5, wherein the sliding block body has an inner cavity, and the outer surface of the supporting inner shell is in contact with a cavity wall of the inner cavity.

12. The sliding block structure according to any one of claims 1 to 5, wherein the flange is integrally formed with the sliding block body.

13. A reversing valve comprising the sliding block structure according to any one of claims 1 to 12.
